# EUROPEAN PATENT APPLICATION

(11) **EP 4 075 013 A1**
(43) Date of publication of application: **19.10.2022**
(21) Application number: 20899320.4
(22) Date of filing: 08.12.2020
(51) Int. Cl.: F16F 9/38

(54) **SHOCK ABSORBER**

(30) Priority: 11.12.2019 JP 2019223749
(71) Applicant: Hitachi Astemo, Ltd., Ibaraki 312-8503 (JP)
(72) Inventor: SHIBAHARA, Kazuaki, Hitachinaka-shi, Ibaraki 312-8503 (JP)
(74) Representative: Hoffmann Eitle
(86) International application number: PCT/JP2020/045627
(87) International publication number: WO 2021/117706

(57) **Abstract**

A shock absorber (1) includes an outer tube (3), a piston rod (15) protruding from an axial end portion of the outer tube (3), a tubular outer cover (30) coupled with the piston rod (15) and covering at least a part of an outer periphery of the outer tube (3), and a guide ring (47) disposed between the outer tube (3) and the outer cover (30). A water removal groove (40A) is provided on an inner peripheral surface of the outer cover (30). The water removal groove (40A) establishes communication between one axial end side and an opposite axial end side with respect to the guide ring (47) in the outer cover (30). Due to this configuration, the shock absorber (1) allows rainwater or the like leaked in the outer cover (30) to be easily discharged outward via the water removal groove (40A).

## Description

### TECHNICAL FIELD

The present invention relates to a shock absorber that generates a damping force according to a movement of a piston rod.

### BACKGROUND ART

Generally, a shock absorber is installed sideways between a vehicle body and a bogie or a vehicle body and a vehicle body of a railway train. The shock absorber employs, for example, a double-tube structure including a cylinder and an outer tube disposed generally concentrically around the outer periphery of this cylinder. A tubular outer cover for protecting a piston rod protruding from an axial end portion of the outer tube from a flying object such as a flying stone is disposed around the outer periphery of this outer tube. This outer cover is fixed at an axial end portion thereof to the outer peripheral surface of a head member with use of a plurality of attachment bolts. This head member is fixed to the protrusion end portion of the piston rod. Further, a C-shaped slider is provided between the outer cover and the outer tube so as to create a space therebetween. The purpose therefor is to prevent the outer tube from incurring damage due to contact between the outer cover and the outer tube and also prevent a reduction in the extension and compression performance of the shock absorber due to contact between the outer cover and the outer tube.

The conventional shock absorber configured in this manner raises such a concern that rainwater or the like may enter the outer cover via between the outer cover and the head portion and via the slit portion (the opening portion) of the C-shaped slider, for example, when it rains. However, water pooled at the bottom portion of the outer cover can be discharged outward via this opening portion as long as the opening portion of the slider is located at the lower end, but the opening portion of the slider is not necessarily located at the lower portion due to a behavior of the vehicle or the like because the slider is rotatably supported between the outer cover and the outer tube. This may result in the occurrence of such a phenomenon that an outward discharge of water from inside the outer cover is impeded, and thus cause the water to be pooled at the bottom portion thereof for a long time, thereby leading to the occurrence of inconvenience such as corrosion on the surface of a rod guide, a male screw portion of the rod guide, and the like. Further, the conventional shock absorber also raises a problem that, especially when the shock absorber is equipped with a dust cover, air in the outer cover and the dust cover cannot be smoothly sucked and discharged, and this undesirably affects the damping force characteristic of the shock absorber.

The invention disclosed in PTL 1 has been proposed to take a countermeasure against this problem. This PTL 1 discusses that a shock absorber includes an outer tube, a piston rod inserted in this outer tube so as to be able to enter and exit the outer tube, a tubular cover covering an opening end portion of the outer tube and a protrusion portion of the piston rod protruding from a sealing member sealing the opening end of this outer tube, and a guide ring provided on the outer periphery of the opening end portion of the outer tube or the outer periphery of the sealing member and configured to cause the outer periphery to face the inner periphery of the cover, and the guide ring includes a plurality of cutouts arranged at circumferential intervals on the outer periphery.

### CITATION LIST

### PATENT LITERATURE

PTL 1: Japanese Patent Application Public Disclosure No. 2014-9804

### SUMMARY OF INVENTION

### TECHNICAL PROBLEM

As described above, the shock absorber discussed in PTL 1 includes a large number of water removal cutouts on the outer peripheral surface of the guide ring along the circumferential direction, but fails to solve the above-described problem, like, for example, being incapable of discharging water from inside the cover (the outer cover) and the dust cover and also undesirably affecting the damping force characteristic of the shock absorber especially when the shock absorber is equipped with the dust cover or the like. In sum, the shock absorber discussed in PTL 1 makes it difficult to equip it with the dust cover. Further, the shock absorber discussed in PTL 1 includes the large number of water removal cutouts on the outer peripheral surface of the guide ring thereof along the circumferential direction, thereby being unable to secure the rigidity of the guide ring. As a result, this shock absorber raises a concern that the cover may contact the outer tube due to the collapse of protrusion portions between the respective cutouts of the guide ring, thereby causing a concern that the outer peripheral surface of the outer tube may incur damage or the extension and compression operability of the shock absorber may be impaired.

Under these circumstances, an object of the present invention is to provide a shock absorber at least allowing water to be discharged outward from inside an outer cover.

### SOLUTION TO PROBLEM

According to a first aspect of the present invention, a shock absorber includes an outer tube, a piston rod protruding from an axial end portion of the outer tube, a tubular outer cover coupled with the piston rod and covering at least a part of an outer periphery of the outer tube, and a guide ring disposed between the outer tube and the outer cover. A water removal groove is provided on an inner peripheral surface of the outer cover. The water removal groove establishes communication between one axial end side and an opposite axial end side with respect to the guide ring in the outer cover.

Further, according to a second aspect of the present invention, a shock absorber includes an outer tube, a piston rod protruding from an axial end portion of the outer tube, a tubular outer cover coupled with the piston rod and covering at least a part of an outer periphery of the outer tube, and a guide ring disposed between the outer tube and the outer cover. Water removal holes are provided to the outer cover on both one axial end side and an opposite axial end side with respect to the guide ring in communication with an outside, respectively.

The shock absorber according to one aspect of the present invention allows water to be easily discharged outward from inside the outer cover. Further, especially, even when being equipped with a dust cover, the shock absorber allows water to be easily discharged from inside the outer cover and the dust cover and further allows air to be also smoothly sucked into and discharged from the outer cover and the dust cover, thereby being able to secure a desired damping force characteristic in the shock absorber.

### BRIEF DESCRIPTION OF DRAWINGS

Fig. 1 is a partial cross-sectional view of a shock absorber according to an embodiment of the present invention.
Fig. 2 is an enlarged view of a portion A illustrated in Fig. 1.
Fig. 3 is a perspective view of an outer cover employed for the shock absorber illustrated in Fig. 1.
Fig. 4 is a partial cross-sectional view along a line B-B illustrated in Fig. 1.
Fig. 5 is a cross-sectional view illustrating another embodiment of a water removal groove of the outer cover employed for the shock absorber illustrated in Fig. 1.
Fig. 6 is a cross-sectional view illustrating further another embodiment of the water removal groove of the outer cover employed for the shock absorber illustrated in Fig. 1.
Fig. 7 is a cross-sectional view illustrating further another embodiment of the water removal groove of the outer cover employed for the shock absorber illustrated in Fig. 1.
Fig. 8(a) is a cross-sectional view illustrating further another embodiment of the water removal groove of the outer cover employed for the shock absorber illustrated in Fig. 1, and Fig. 8(b) is an enlarged view of a portion C illustrated in Fig. 8(a).
Fig. 9 is a cross-sectional view illustrating further another embodiment of the water removal groove of the outer cover employed for the shock absorber illustrated in Fig. 1.
Fig. 10 is a partial cross-sectional view of a shock absorber according to another embodiment of the present invention.
Fig. 11 is an enlarged view of a portion D illustrated in Fig. 10.
Fig. 12 is a perspective view illustrating another embodiment of the water removal groove of the outer cover employed for the shock absorber illustrated in Fig. 10.

### DESCRIPTION OF EMBODIMENTS

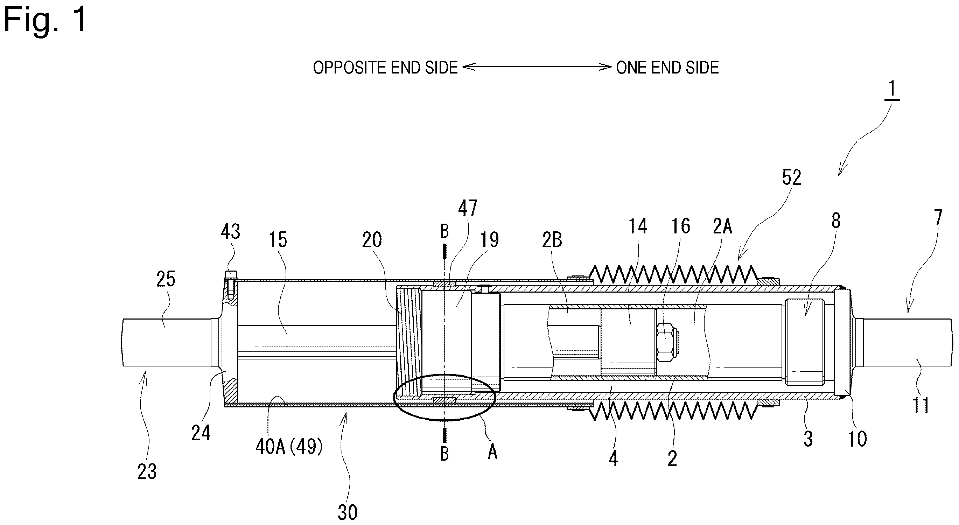

In the following description, a shock absorber 1 according to embodiments of the present invention will be described in detail with reference to Figs. 1 to 12. The shock absorber 1 according to the present embodiments is a damper for damping an oscillating motion of a railway train, and is installed generally horizontally and laid sideways in use between a vehicle body and a bogie or between a vehicle body and a vehicle body of a railway train. In the following description, the present embodiments will be described referring to a portion located on the upper side and a portion located on the lower side with respect to a piston rod 15 in a state that the shock absorber 1 is installed as an upper portion and a lower portion, respectively.

The shock absorber 1 according to an embodiment of the present invention includes a cylindrical outer tube 3 provided around the outer periphery of a cylinder 2 generally concentrically as illustrated in Fig. 1. An annular reservoir 4 is formed between these cylinder 2 and outer tube 3. In other words, the shock absorber 1 according to the present embodiment is formed into a double-tube structure. The openings of the cylinder 2 and the outer tube 3 at one ends thereof are closed by a one end-side bracket 7 and a base member 8. More specifically, the opening of the cylinder 2 at the one end thereof is liquid-tightly fitted in the base member 8. The one end-side bracket 7 is constructed by integrally connecting a disk-like plate portion 10 and a one end-side bracket portion 11. The disk-like plate portion 10 is welded to the one end of the outer tube 3. The one end-side bracket portion 11 is provided in a manner protruding from this plate portion 10 to the one end side. The opening of the outer tube 3 at the one end thereof is closed by the plate portion 10 of the one end-side bracket 7. The one end-side bracket portion 11 of the one end-side bracket 7 is attached to the vehicle side. The base member 8 is disposed between the one end-side bracket 7 and the one end of the cylinder 2. The openings of the cylinder 2 and the outer tube 3 at the opposite ends thereof are closed by a rod guide 19 and an opposite end-side plate 20.

A piston 14 is disposed in the cylinder 2 slidably along the axial direction of the cylinder 2. As a result, the inside the cylinder 2 is divided into two chambers, cylinder chambers 2A and 2B by the piston 14. One end portion of the piston rod 15 is coupled with the piston 14 with use of a nut 16. A passage establishing communication between the cylinder chambers 2A and 2B is provided to the piston 14 although being not illustrated. A check valve (a damping valve) or the like is provided in this passage. The check valve functions to apply flow resistance to hydraulic oil flowing in the passage according to a movement of the piston rod 15, and a damping force is generated against the stroke of the piston rod 15 with the aid of this check valve.

The opposite end side of the piston rod 15 is slidably and liquid-tightly inserted through the rod guide 19 and the opposite end-side plate 20, and extends out of the cylinder 2 and the outer tube 3. The inside of the cylinder 2 is filled with the hydraulic oil. The hydraulic oil and gas are sealingly contained in the reservoir 4. A passage establishing communication between the cylinder chamber 2A and the reservoir 4 is provided to the base member 8 and the plate portion 10 of the one end-side bracket 7 although being not illustrated. A check valve (a damping valve) or the like is provided in this passage. An opposite end-side bracket 23 is fixed to the opposite end of the piston rod 15. The opposite end-side bracket 23 is constructed by integrally connecting a disk-like head portion 24 and an opposite end-side bracket portion 25. The head portion 24 is located on the one end side and is connected to the opposite end (a protrusion end portion) of the piston rod 15. The opposite end-side bracket portion 25 is provided in a manner protruding from this head portion 24 to the opposite end side, and is attached to the vehicle side. The outer diameter of the head portion 24 is set to a diameter slightly larger than the outer diameter of the outer tube 3.

The rod guide 19 is cylindrically formed, and functions to slidably support the piston rod 15 protruding from the opposite end of the cylinder 2. The rod guide 19 is supported in the outer cylinder 3 on the opposite end side. A passage establishing communication between the cylinder chamber 2B and the reservoir 4 is provided to the rod guide 19 although being not illustrated. A check valve (a damping valve) or the like may be provided in this passage. The opposite end-side plate 20 is disposed on the opposite end side of the rod guide 19. The opposite end-side plate 20 includes a screw portion on the outer peripheral surface thereof. The opposite end-side plate 20 is annularly formed. The rod guide 19 is supported between the opposite end-side plate 20 and the opposite end of the cylinder 2 in the opposite end portion of the outer tube 3 by placing this opposite end-side plate 20 on the opposite end side of the rod guide 19 and threadably engaging it with the inner peripheral surface of the opposite end of the outer tube 3.

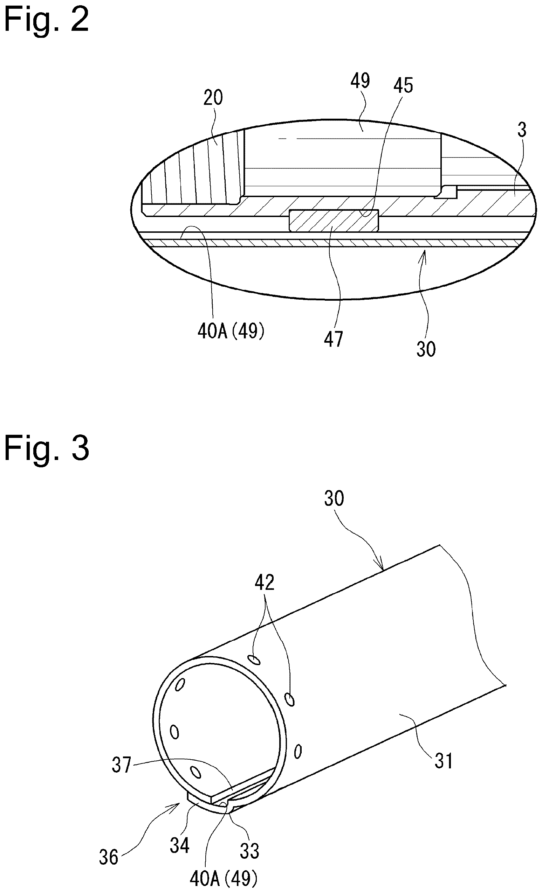

An outer cover 30 is disposed around the outer periphery of the piston rod 15. This outer cover 30 is formed into a thin-walled cylindrical shape. The outer cover 30 extends to near an approximately axially central position of the outer tube 3 so as to cover the entire outer periphery of the piston rod 15. Also referring to Fig. 3, the outer cover 30 is constructed by cylindrically rolling one metallic and generally rectangular plate material 31 and welding the both end portions thereof. The outer cover 30 may be constructed by using a plurality of plate materials 31 and 31 and welding a plurality of portions. A bent portion 33 and an extension portion 34 are formed at one end of the plate material 31. The bent portion 33 is bent outward by an amount corresponding to the plate thickness. The extension portion 34 circumferentially extends continuously from this bent portion 33. An overlap portion 36 is formed by overlaying the inner peripheral surface of the extension portion 34 provided at the one end of the plate material 31 on the outer peripheral surface of the opposite end of the plate material 31. This overlap portion 36 is formed along the axial direction of the outer cover 30 over the entire region thereof. The plate material 31 is configured in such a manner that a space portion 37 is formed between the opposite end surface of the plate material 31 and the proximal portion of the bent portion 33 provided at the one end of the plate material 31.

Then, the overlap portion 36, which is formed by overlaying the inner peripheral surface of the extension portion 34 provided at the one end of the plate material 31 on the outer peripheral surface of the opposite end of the plate material 31, is joined by applying spot welding thereto at a plurality of portions at intervals along the axial direction of the outer cover 30. The outer cover 30 is constructed by that. The overlap portion 36 may be joined by applying fillet welding between the outer peripheral surface of the opposite end of the plate material 31 and the distal end surface of the extension portion 34 provided at the one end of the plate material 31. As a result, the inner diameter of the outer cover 30 approximately matches the outer diameter of a guide ring 47, which will be described below, and this inner diameter is kept constant along the axial direction. Further, the space portion 37 generally rectangular in cross section is formed between the opposite end surface of the plate material 31 and the proximal portion of the bent portion 33 provided at the one end of the plate material 31 so as to be located adjacent to the overlap portion 36 of the plate material 31. This space portion 37 functions as a water removal groove 40A generally rectangular in cross section on the inner peripheral surface of the outer cover 30. The water removal groove 40A is located at the lowest portion when the shock absorber 1 is installed sideways. The water removal groove 40A is formed over the entire axial region of the outer cover 30. A plurality of attachment holes 42 and 42 is formed at circumferential intervals at one end of the outer cover 30.

Then, as illustrated in Fig. 1, attachment bolts 43 and 43 are each threadably engaged with the outer peripheral surface of the head portion 24 while being inserted through the attachment holes 42 and 42 (refer to Fig. 3) of the outer cover 30, respectively, with the inner peripheral surface of the opposite end of the outer cover 30 in abutment with the outer peripheral surface of the head portion 24 of the opposite end-side bracket 23. As a result, the opposite end of the outer cover 30 is fixed to the outer peripheral surface of the head portion 24 of the opposite end-side bracket 23. Further, also referring to Fig. 2, an annular groove portion 45 is formed on the outer peripheral surface of the opposite end of the outer tube 3. The guide ring 47 is rotatably fitted between the inner peripheral surface of the outer cover 30 and the annular groove portion 45 of the outer tube 3. The guide ring 47 is formed into a C-like shape having a slit (not illustrated). The guide ring 47 is formed into a generally rectangular shape in cross section. The guide ring 47 is made from synthetic resin.

Referring to Fig. 1, this guide ring 47 is used to prevent contact between the outer cover 30 and the outer tube 3 by supporting the outer cover 30 so as to create an interval between the outer cover 30 and the outer tube 3. The guide ring 47 is arranged in such a manner that the slit thereof (the opening side) faces downward in the state that the shock absorber 1 is installed (installed sideways). However, the guide ring 47 is rotatably fitted in the annular groove portion 45 of the outer tube 3, and therefore the slit of the guide ring 47 may be displaced to any position along the circumferential direction of the outer tube 3 due to a behavior of the vehicle or the like. Then, referring to Figs. 1, 2, and 4, the present configuration leads to the formation of a linear passage 49 extending over the entire axial region of the outer cover 30 between the outer peripheral surface of the guide ring 47 and the water removal groove 40A of the outer cover 30. As a result, the waver removal groove 40A (the linear passage 49) provided to the outer cover 30 establishes communication between one axial end side and the opposite axial end side with respect to the guide ring 47 in the outer cover 30. Further, the water removal groove 40A is formed over the entire axial region of the outer cover 30, and therefore can establish communication between the one axial end side and the opposite axial side with respect to the guide ring 47 regardless of the stroke length of the piston rod 15.

Further, as illustrated in Fig. 1, a tubular outer dust cover 52 is disposed between the one end of the outer cover 30 and the one end side of the outer tube 3. The outer dust cover 52 is formed in a bellows manner axially extensibly and compressibly. This outer cover 52 is used to prevent dust (dirt) from entering the outer cover 30 from between the opposite end side of the outer cover 30 and the outer tube 3 via the slit of the guide ring 47. As a result, the water removal groove 40A (the liner passage 49) provided to the outer cover 30 is configured in such a manner that the opposite end portion thereof, i.e., the end portion on the fixed side where the outer cover 30 is fixed is in communication with the outside. The shock absorber 1 according to the present embodiment includes the outer dust cover 52 but does not necessarily have to be equipped with it. In a case where the shock absorber 1 is not equipped with the outer dust cover 52, the water removal groove 40A provided to the outer cover 30 is configured in such a manner that the both axial end portions thereof are in communication with the outside.

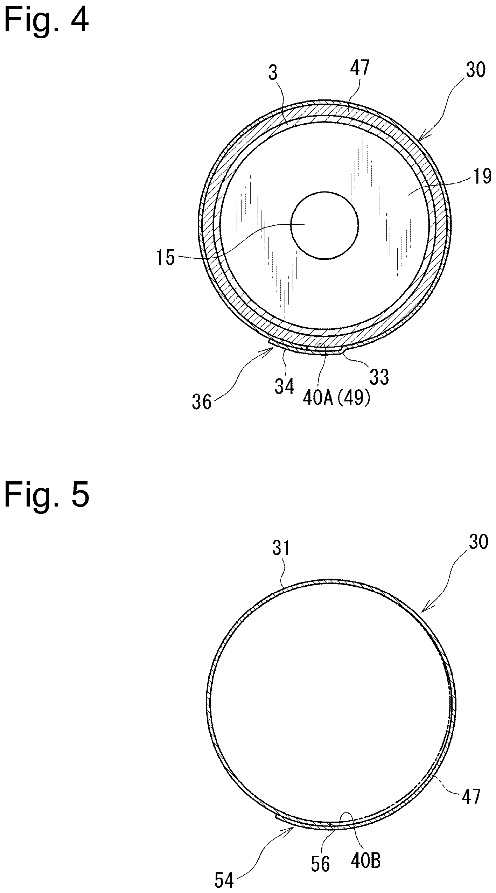

As another embodiment of the water removal groove 40A provided to the outer cover 30, as illustrated in Fig. 5, the outer cover 30 is constructed by joining the both end portions of the plate material 31 after placing them so as to overlay them without providing the bent portion 33 at the one end of the plate material 31. This leads to the formation of a stepped portion 56 having a height corresponding to the thickness of the plate material 31 at a position adjacent to an overlap portion 54 where the both end portions are overlaid. The stepped portion 56 provided to the outer cover 30 is located at the lowest portion when the shock absorber 1 is installed sideways. As a result, the stepped portion 56 provided to the outer cover 30 functions as a water removal groove 40B.

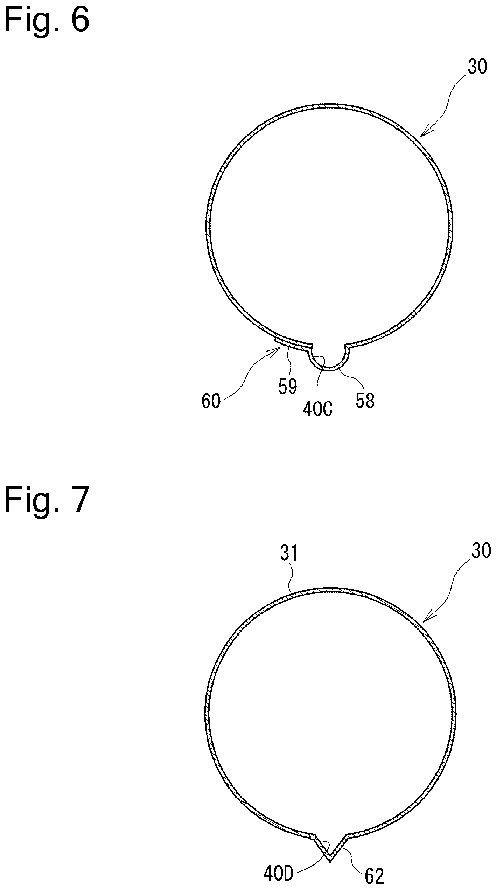

Further, as further another embodiment of the water removal groove 40A provided to the outer cover 30, as illustrated in Fig. 6, a U-shaped portion 58 and an extension portion 59 are provided at the one end of the plate material 31. The U-shaped portion 58 is provided in a radially outward protruding manner U-shaped in cross section. The extension portion 59 circumferentially extends continuously from this U-shaped portion 58. Then, an overlap portion 60 is formed by overlaying the inner peripheral surface of the extension portion 59 provided at the one end of the plate material 31 on the outer peripheral surface of the opposite end of the plate material 31, and the outer cover 30 is constructed by joining this overlap portion 60 with welding. The U-shaped portion 58 provided to the outer cover 30 is located at the lowest portion when the shock absorber 1 is installed sideways. As a result, the U-shaped portion 58 provided to the outer cover 30 functions as a water removal groove 40C.

Further, as further another embodiment of the water removal groove 40A provided to the outer cover 30, as illustrated in Fig. 7, a V-shaped portion 62 is provided at the one end of the plate material 31. The V-shaped portion 62 is provided in a radially outward protruding manner V-shaped in cross section. Then, the outer cover 30 is constructed by placing the opposite end surface of the plate material 31 and the one end surface of the plate material 31 into abutment with each other and joining this abutment portion with welding. The V-shaped portion 62 provided to the outer cover 30 is located at the lowest portion when the shock absorber 1 is installed sideways. As a result, the V-shaped portion 62 provided to the outer cover 30 functions as a water removal groove 40D.

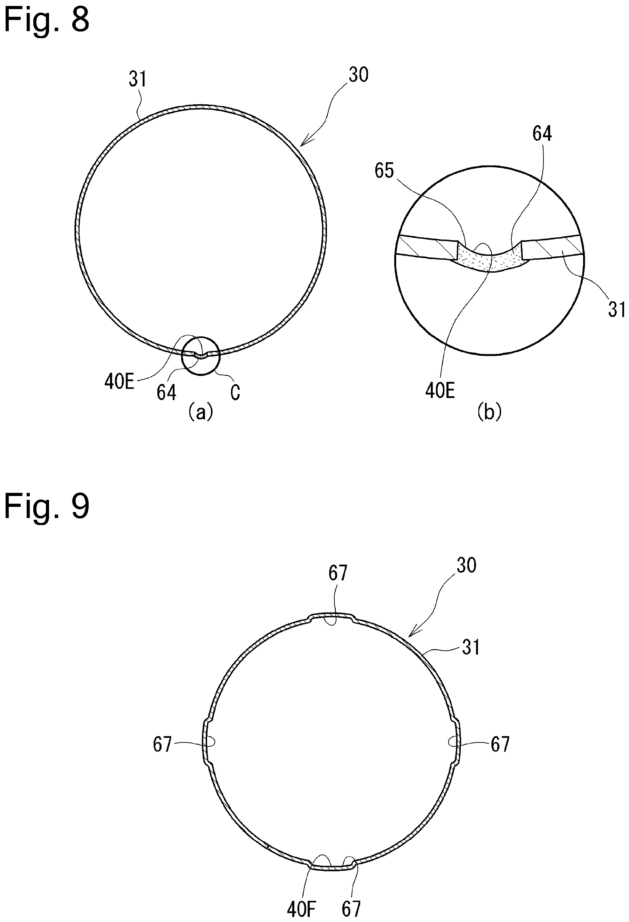

Furthermore, as further another embodiment of the water removal groove 40A provided to the outer cover 30, as illustrated in Fig. 8, a joint portion 64 is formed by placing the both end portions of the plate material 31 into abutment with each other and joining them with welding. The outer cover 30 is constructed by that. Further, a recessed portion 65 is formed by applying bead cutting processing on a weld bead generated at this joint portion 64 so as to recess it beyond the inner peripheral surface of the outer cover 30. This recessed portion 65 is formed along the axial direction of the outer cover 30 over the entire region thereof. The joint portion 64 and the recessed portion 65 of the outer cover 30 are located at the lowest portion when the shock absorber 1 is installed sideways. Then, the recessed portion 65 provided at the joint portion 64 of the outer cover 30 functions as a water removal groove 40E.

Furthermore, as further another embodiment of the water removal groove 40A provided to the outer cover 30, as illustrated in Fig. 9, the outer cover 30 is constructed by forming a plurality of recessed portions 67 and 67 where the entire wall portion is recessed on the plate material 31 at intervals in advance, cylindrically rolling this plate material 31, placing the both end portions of this plate material 31 into abutment with each other, and then joining them with welding. As a result, the plurality of recessed portions 67 and 67 is formed on the inner peripheral surface of the outer cover 30 at intervals along the circumferential direction. Each of the recessed portions 67 and 67 is formed along the axial direction of the outer cover 30 over the entire region thereof. Any one of the plurality of recessed portions 67 and 67 provided to the outer cover 30 is located at the lowest portion when the shock absorber 1 is installed sideways. Then, the recessed portion 67 provided on the inner circumferential surface of the outer cover 30 and located at the lowest portion functions as a water removal groove 40F. In the case of this embodiment, since the plurality of recessed portions 67 and 67 is formed, the attachment position of the outer cover 30 along the circumferential direction is not limited to one position and the outer cover 30 can be attached at any of a plurality of positions corresponding to the number of recessed portions 67, and this allows the outer cover 30 to reduce incorrect mounting thereof.

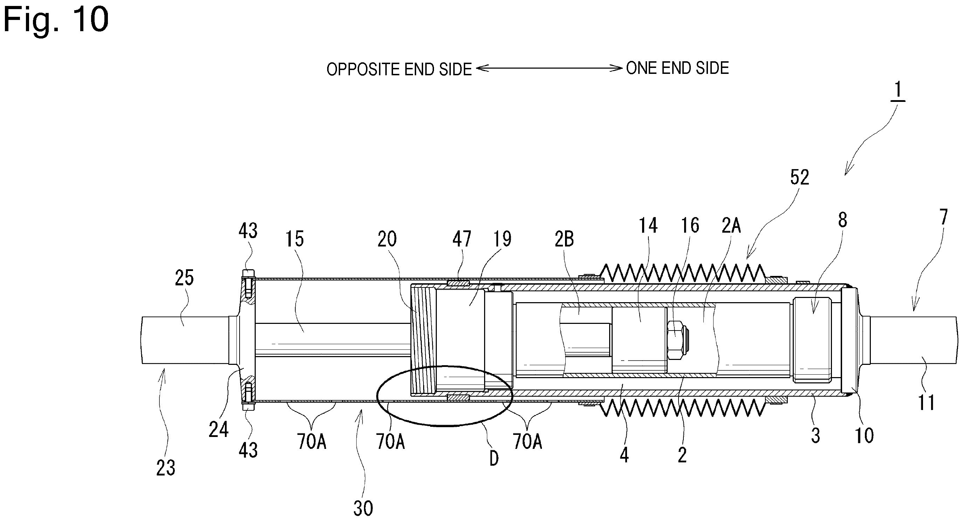

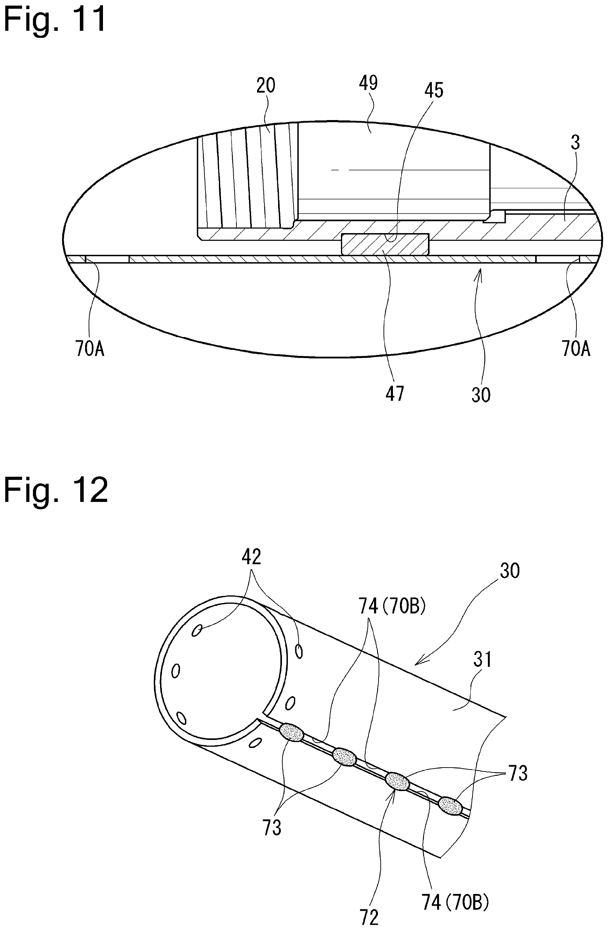

The water removal grooves 40A to 40F, which establish the communication between the one axial end side and the opposite axial end side with respect to the guide ring 47 in the outer cover 30 and are also in communication with the outside of the outer cover 30, are formed on the inner peripheral surface of the outer cover 30 in the above-described embodiments, but a plurality of water removal holes 70A and 70A may be provided so as to extend through the outer cover 30 in communication with the outside of the outer cover 30 on both the one axial end side and the opposite axial end side of the outer cover 30 with respect to the guide ring 47 as illustrated in Figs. 10 and 11. In the case of this embodiment, each of the water removal holes 70A and 70A is located at the lowest portion when the shock absorber 1 is installed sideways. The outer cover 30 includes an axially extending joint portion (for example, refer to the reference numeral 64 in Fig. 8), which is formed by cylindrically shaping the single plate material 31 so as to roll it, and placing the both end portions thereof in abutment with each other and j oining them with welding. Then, these water removal holes 70A and 70A may be formed at this joint portion at a plurality of portions at intervals along the axial direction.

Further, as illustrated in Fig. 12, the outer cover 30 includes an axially extending joint portion 72, which is formed by cylindrically shaping the single plate material 31 so as to roll it, and placing the both end portions thereof in abutment with each other and joining them. This joint portion 72 is formed by applying spot welding 73 and 73 to the both end portions of the plate material 31 at a plurality of portions at intervals along the axial direction thereof. This results in the formation of a plurality of spaces 74 and 74 at this joint portion 72 at intervals along the axial direction between the portions where the spot welding 73 and 73 is applied. The joint portion 72 and the spaces 74 and 74 of the outer cover 30 are located at the lowest portion when the shock absorber 1 is installed sideways. Then, each of the spaces 74 and 74 provided at the joint portion 72 of the outer cover 30 may be caused to function as water removal holes 70B and 70B.

In the above-described manner, in the shock absorber 1 according to the present embodiments, the water removal grooves 40A to 40F, which establish the communication between the one axial end side and the opposite axial end side with respect to the guide ring 47 in the outer cover 30, are provided on the inner peripheral surface of this outer cover 30, and these water removal grooves 40A to 40F are in communication with the outside of the outer cover 30. Further, these water removal grooves 40A to 40F are located at the lowest portion thereof in the state that the shock absorber 1 is installed. Due to this configuration, even when the guide ring 47 rotates along the annular groove portion 45 of the outer tube 3 due to, for example, a behavior of the vehicle and the slit thereof is located on the upper side of the outer tube 3, rainwater or the like leaked in the outer cover 30 can be easily discharged outward via the water removal grooves 40A to 40F. As a result, the shock absorber 1 can reduce corrosion of the rod guide 19 and the like, thereby improving the reliability thereof.

Further, the guide ring 47 has rigidity so as to support the outer cover 30, and therefore can prevent the outer cover 30 from contacting the outer tube 3, thereby preventing damage on the outer peripheral surface of the outer tube 3 and further contributing to securing the extension/compression operability of the shock absorber 1 as a result thereof. Further, the water removal grooves 40A to 40F provided on the inner peripheral surface of the outer cover 30 also serve as suction and discharge holes for air in the outer cover 30 and the outer dust cover 52, thereby being able to contribute to securing a desired damping force characteristic in the shock absorber 1.

Further, in the shock absorber 1 according to the present embodiments, the water removal grooves 40A to 40F thereof extend to the position where they establish the constant communication between the one axial end side and the opposite axial end side with respect to the guide ring 47 in the outer cover 30 regardless of the stroke length of the piston rod 15. Due to this configuration, the water removal grooves 40A to 40F allow rainwater or the like in the outer cover 30 to be easily discharged regardless of the stroke length of the piston rod 15, thereby being able to contribute to securing the desired damping force characteristic in the shock absorber 1.

Further, in the shock absorber 1 according to the present embodiments, the outer cover 30 is fixed to the head portion 24 of the opposite end-side bracket 23 fixed to the piston rod 15, and the opposite end portions of the water removal grooves 40A to 40F are in communication with the outside of the outer cover 30. Due to this configuration, the water removal grooves 40A to 40F can be brought into communication with the outside of the outer cover 30 even when the shock absorber 1 is equipped with the tubular outer dust cover 52 having the one end and the opposite end fixed to the outer tube 3 and the outer cover 30, respectively, and configured to restrict the entry of dust into the outer cover 30.

Furthermore, in the shock absorber 1 according to the present embodiment, the water removal groove 40B is formed by the stepped portion 56 adjacent to the overlap portion 54 where the both end portions of the plate material 31 overlap each other, and therefore the manufacturing cost of the outer cover 30 can be reduced.

Furthermore, in the shock absorber 1 according to the present embodiment, the water removal holes 70A and 70A (or 70B and 70B) are provided to the outer cover 30 so as to extend therethrough on both the one axial end side and the opposite axial end side with respect to the guide ring 47, respectively. This configuration allows rainwater or the like leaked in the outer cover 30 to be easily discharged outward via each of the water removal holes 70A and 70A (or 70B and 70B). Further, each of the water removal holes 70A and 70A (or 70B or 70B) provided to the outer cover 30 also functions as the suction and discharge hole for air in the outer cover 30 and the outer dust cover 52, thereby being able to contribute to securing the desired damping force characteristic in the shock absorber 1.

Furthermore, the shock absorber 1 according to the present embodiment is configured in such a manner that the both end portions of the plate material 31 are placed in abutment with each other and are joined with the spot welding 73 and 73 with the plurality of spaces 74 and 74 created in the axial direction of the piston rod 15, and these spaces 74 and 74 are used as the water removal holes 70B and 70B, thereby being able to reduce the manufacturing cost of the outer cover 30.

Furthermore, the shock absorber 1 according to the present embodiments includes the outer dust cover 52 in addition to the guide ring 47, thereby being able to prevent the entry of dust from the one end side into the outer cover 30. In this manner, the shock absorber 1 according to the present embodiments allows the water removal grooves 40A to 40F or the water removal holes 70A and 70A (or 70B and 70B) provided to the outer cover 30 to be kept in communication with the outside even while being equipped with the outer dust cover 52, thereby being able to easily discharge water from inside the outer cover 30 outward. Further, each of the water removal grooves 40A to 40F or the water removal holes 70A and 70A (or 70B or 70B) provided to the outer cover 30 also functions as the suction and discharge hole for air in the outer cover 30 and the outer dust cover 52, thereby being able to contribute to securing the desired damping force characteristic in the shock absorber 1.

The present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2019-223749 filed on December 11, 2019. The entire disclosure of Japanese Patent Application No. 2019-223749 filed on December 11, 2019 including the specification, the claims, the drawings, and the abstract is incorporated herein by reference in its entirety.

### REFERENCE SIGNS LIST

- 1: shock absorber
- 3: outer tube
- 14: piston
- 15: piston rod
- 30: outer cover
- 31: plate material
- 47: guide ring
- 40A to 40F: water removal grooves
- 56: stepped portion
- 64: joint portion
- 65: recessed portion
- 70A and 70B: water removal holes
- 52: outer dust cover
- 74: space

## Claims

1. A shock absorber comprising:
an outer tube;
a piston rod protruding from an axial end portion of the outer tube;
a tubular outer cover coupled with the piston rod and covering at least a part of an outer periphery of the outer tube; and
a guide ring disposed between the outer tube and the outer cover,
wherein a water removal groove is provided on an inner peripheral surface of the outer cover, the water removal groove establishing communication between one axial end side and an opposite axial end side with respect to the guide ring in the outer cover.

2. The shock absorber according to claim 1, wherein the water removal groove extends to a position where it establishes constant communication between the one axial end side and the opposite axial end side with respect to the guide ring in the outer cover regardless of a stroke length of the piston rod.

3. The shock absorber according to claim 1 or 2, wherein the outer cover is directly or indirectly fixed to a protrusion end portion of the piston rod, and
wherein an end portion of the water removal groove on the fixed side is in communication with an outside of the outer cover.

4. The shock absorber according to any one of claims 1 to 3, wherein the outer cover is made of a plate material having both end portions joined at a joint portion extending in an axial direction of the piston rod, and the water removal groove is provided at the joint portion.

5. A shock absorber comprising:
an outer tube;
a piston rod protruding from an axial end portion of the outer tube;
a tubular outer cover coupled with the piston rod and covering at least a part of an outer periphery of the outer tube; and
a guide ring disposed between the outer tube and the outer cover,
wherein water removal holes are provided to the outer cover on both one axial end side and an opposite axial end side with respect to the guide ring in communication with an outside, respectively.

6. The shock absorber according to claim 5, wherein the outer cover is made of one or a plurality of plate material(s) joined at a joint portion extending in an axial direction of the piston rod, and
wherein the water removal holes are provided on both the one axial end side and the opposite axial end side of the joint portion with respect to the guide ring, respectively.

7. The shock absorber according to claim 5 or 6, wherein the water removal holes are a water removal groove that communicates from the one axial end to the opposite axial end in the outer cover and communicates with the outside of the outer cover.

8. The shock absorber according to claim 7, wherein the joint portion includes an overlap portion where both end portions of the plate material overlap each other, and
wherein the water removal groove is formed by a stepped portion adjacent to the overlap portion.

9. The shock absorber according to claim 6, wherein the joint portion is configured in such a manner that both end portions of the plate material are placed in abutment with each other and are joined with a plurality of spaces created in the axial direction of the piston rod, and the spaces serve as the water removal holes.

10. The shock absorber according to any one of claims 1 to 9, wherein the water removal holes are or the water removal groove is provided at a lower portion of the outer cover in a state that the shock absorber is installed.

11. The shock absorber according to any one of claims 1 to 10, further comprising a tubular outer dust cover having one end and an opposite end fixed to the outer tube and the outer cover, respectively, and configured to restrict entry of dust into the outer cover.
